# EUROPÄISCHE PATENTSCHRIFT

(11) **EP 2 103 462 B1**
(45) Veröffentlichungstag und Bekanntmachung des Hinweises auf die Patenterteilung: **05.01.2011**
(21) Anmeldenummer: 09002552.9
(22) Anmeldetag: 24.02.2009
(51) Int. Cl.: B60H 1/34, B60H 1/00

(54) **Anzeigeeinrichtung für eine Komfortdüse**
Display device for a comfort nozzle
Dispositif d'affichage pour une buse d'aération de confort

(30) Priorität: 20.03.2008 DE 102008015343
(43) Veröffentlichungstag der Anmeldung: 23.09.2009
(73) Patentinhaber: Behr GmbH & Co. KG, 70469 Stuttgart (DE)
(72) Erfinder: Rais, Thomas, 71672 Marbach/Neckar (DE)

(56) Entgegenhaltungen:
- EP-A- 1 059 188
- EP-A- 1 080 974
- DE-U1-202006 003 543
- FR-A- 2 830 632
- US-B1- 6 175 782

## Beschreibung

Die Erfindung betrifft eine Anzeigeeinrichtung für eine Komfortdüse gemäß dem Oberbegriff des Anspruches 1.

Um Luft einem Fahrzeuginnenraum zuzuführen, sind üblicherweise eine Mehrzahl von einzelnen Düsen vorgesehen. So sind im Frontbereich eines Fahrzeuginnenraums üblicherweise Seiten- und Mitteldüsen sowie Defrostund Fußraumdüsen angeordnet. Für die Belüftung und ggf. Temperierung des Fondbereichs sind vielfach weitere Düsen in Gestalt von Belüftungs- und Fußraumdüsen vorgesehen. Als Düsen sind unter anderem sogenannte Komfortdüsen bekannt, bei denen ein Luftstrom im Inneren der Düse durch entsprechende Leitschaufeln, Leitflächen o.ä. mit einem Drall versetzt wird, so dass sich der Luftstrahl beim Ausströmen stark aufweitet und im Wesentlichen diffus austritt. Hierbei kann die Düse auch derart ausgestaltet sein; dass eine Wahl zwischen diffusem Ausströmen und gerichtetem Ausströmen (Spotstrahl) möglich ist, wobei in der Regel verschiedene Stellungen möglich sind, oder eine stufenlose Verstellbarkeit zwischen maximal diffusem Ausströmen, d.h. maximal aufgeweitetem Luftstrahl, und gerichtetem Ausströmen vorgesehen ist. Derartige Komfortdüsen sind beispielsweise in der WO 2005 / 016673 A1 (starre Leitflächen), der DE 10 2005 054 295.6 (starre Leitschaufeln) oder der DE 10 2006 053 836.6 (bewegliche Leitschaufeln) beschrieben. Die Leitflächen bzw. -schaufeln bilden hierbei Drallerzeuger, welche einen Luftstrahl verwirbeln. Derartige Komfortdüsen sind im Frontbereich eines Fahrzeugs als Mittel- oder Seitendüsen angeordnet. Die Einstellung derartiger Komfortdüsen erfolgt üblicherweise durch eine Drehbewegung an einem Bedienelement oder einen entsprechend ausgebildeten, vorstehenden Bereich der Dralldüse. Andere Systeme nutzen auch verschwenkbare Lamellen, welche in paralleler Ausrichtung einen gerichteten Luftstrahl und in sich öffnender Anordnung einen aufgeweiteten Luftstrahl erzeugen. Der austretende Luftstrahl kann bei derartigen Komfortdüsen vollständig gerichtet (spot), maximal aufgeweitet (diffus) oder teilweise gerichtet und teilweise aufgeweitet (spot/diffus) eingestellt werden. Bei Komfortdüsen ist es jedoch schwierig, die aktuelle Einstellung, insbesondere in Bezug auf die Aufweitung des Luftstrahls, schnell und eindeutig visuell zu erkennen.

Aus der EP 0 372 160 A1 ist eine beleuchtete Reguliervorrichtung zur Betätigung einer Belüftungseinrichtung oder dergleichen in einem Kraftfahrzeug bekannt. Bei dieser beleuchteten Reguliervorrichtung sind in der Umgebung eines um seine Achse drehbaren Regulierrades mehrere stationär angeordnete Lichtaustritte und am Umfang des Regulierrades ein beweglicher Lichtaustritt vorgesehen. Die Lichtaustritte sind durch Einsätze aus glasklarem, starrem Kunststoff gebildet und sind mit einer gemeinsamen Lichtquelle über Lichtleiteinsätze verbunden. Alle stationären Lichtaustritte sind an den Enden von Armen eines von der Lichtquelle bis zu den Lichtaustritten reichenden, einstückigen Lichtleiteinsatzes mit innerer Totalreflexion aus glasklarem, starrem Kunststoff ausgebildet. Dieser Lichtleiteinsatz ist im Bereich der Drehachse des Regulierrades mit einer seitlichen Lichtaustrittsfläche versehen. Im Regulierrad ist ein von dem beweglichen Lichtaustritt bis in den Bereich der Drehachse reichender, einstückiger Lichtleiteinsatz mit innerer Totalreflexion aus glasklarem, starrem Kunststoff vorgesehen, an dessen radial äußerem Ende der Lichtaustritt ausgebildet ist und an dessen radial innerem Ende eine sich in einer Radialebene erstreckende und der Lichtaustrittsfläche gegenüberstehende Lichteintrittsfläche vorgesehen ist.

Eine andere beleuchtete Reguliervorrichtung zur Betätigung einer Belüf tungseinrichtung ist in der DE 37 15 145 A1 beschrieben, wobei wiederum direkt das als Rad ausgebildete Bedienelement als Anzeigeeinrichtung dient.

Eine Belüftungseinrichtung mit einem Lamellensystems und einem als Rad ausgebildeten Stellglied mit einer Lichtquelle zur Anzeige der Einstellung ist aus der EP 1 055 536 A1 bekannt.

Die EP 1 657 091 A2 betrifft eine Lüftungsdüse für einen Lüftungsschacht in einem Kraftfahrzeug mit einem Düsengehäuse mit einer einlassseitigen und einer auslassseitigen Öffnung. Das Düsengehäuse kann an dem Lüftungsschacht angebracht werden. Hierbei ist ein um die auslassseitige Öffnung rotierbares, ringförmiges Stellglied zum Einstellen einer anderen steuerbaren Fahrzeugkomponente vorgesehen. Eine Sichtanzeige kann die Rotationsstellung des Stellgliedes signalisieren. Auf diese Weise wird die Lüftungsdüse in platzsparender Weise mit dem Stellglied für eine andere Fahrzeugkomponente kombiniert, so dass dieses Stellglied keinen weiteren Platz auf dem Armaturenbrett benötigt.

Diese bekannten Anzeigeeinrichtungen lassen jedoch noch Wünsche offen.

Es ist Aufgabe der Erfindung, eine verbesserte Anzeigeeinrichtung für Komfortdüsen zur Verfügung zu stellen.

Diese Aufgabe wird gelöst durch eine Anzeigeeinrichtung mit den Merkmalen des Anspruches 1 Vorteilhafte Ausgestaltungen sind Gegenstand der Unteransprüche.

Die Erfindung betrifft eine Anzeigeeinrichtung für eine Komfortdüse mit einstellbarer Luftstrahlaufweitung, aufweisend eine Koppelung der aktuellen Einstellung der Luftstrahlaufweitung und einen Anzeigebereich mit einer hierin angeordneten visuellen Anzeige mindestens einer Einstellung der Komfortdüse durch mindestens ein Anzeigeelement, wobei die im Anzeigebereich visuell erkennbare Anzeige die Aufweitung des aus der Komfortdüse austretenden Luftstrahls wiedergibt und der Anzeigebereich durch eine Projektionsfläche gebildet ist, welche durch mindestens ein Lichtelement beleuchtbar ist und das Lichtelement einen veränderbaren Abstrahlwinkel aufweist und der Anzeigebereich durch einen transparenten Blendenbereich und mindestens einer relativ zum transparenten Blendenbereich verschiebbaren Abdeckung gebildet ist. Die im Anzeigebereich visuell erkennbare Anzeige weist bevorzugt eine variable, die aktuelle Einstellung der Komfortdüse anzeigende Länge auf, und die Länge ist besonders bevorzugt - ausgehend von einem mittleren Bereich - in beiden Richtungen veränderbar. Insbesondere bevorzugt erfolgt bei einer Veränderung der Einstellung der Komfortdüse eine spiegelbildlich zur Mitte des Anzeigebereichs Veränderung der Anzeige. Die Koppelung kann auf beliebige Weise erfolgen, bspw. mechanisch oder elektrisch.

Bevorzugt kann - in Abhängigkeit der Einstellung der Komfortdüse - die visuell erkennbare Anzeige, welche die aktuelle Einstellung der Komfortdüse anzeigt, mindestens drei unterschiedliche Längen aufweisen. Insbesondere bevorzugt sind genau drei unterschiedliche Längen vorgesehen, welche die Betriebsstellungen "spot", "spot/diffus" und "diffus" anzeigen. Je nach Ausgestaltung kann die Anzeige auch stufenlos oder durch eine Mehrzahl einzelner Stufen die Einstellung der Komfortdüse zwischen den Betriebsstellungen "spot" und "diffus" wiedergeben.

Insbesondere bevorzugt ist der mittlere Bereich des Anzeigebereichs einer Betriebsstellung "spot" der Komfortdüse zugeordnet. Bevorzugt sind die beiden äußeren Enden des Anzeigebereichs einer Betriebsstellung diffuse" der Komfortdüse zugeordnet. Dies ergibt eine einfache und verständliche Möglichkeit der Darstellung der Einstellung der Komfortdüse in Bezug auf die Betriebsstellungen "spot", "spot/diffus" und "diffus".

Im Anzeigebereich ist bevorzugt eine Mehrzahl von einzelnen Anzeigeelementen angeordnet, welche in Abhängigkeit der Betriebsstellung der Komfortdüse visuell hervorhebbar sind, wobei das mittlere Anzeigeelement einem zumindest teilweise gerichteten Luftaustritt, die benachbarten Anzeigeelemente einem zumindest teilweise diffusen Luftaustritt und die äußersten Anzeigeelemente einem 100% diffusen Luftaustritt zugeordnet sind. Insbesondere bevorzugt sind das oder die Anzeigeelemente durch mindestens ein Lichtelement gebildet. Hierfür können beispielsweise LEDs verwendet werden. Hierbei können die einzelnen Lichtelemente auch unterschiedlich ausgebildet sein oder unterschiedliche Farben aufweisen, wie bspw. um die Einstellung "spot" hervorzuheben.

Erfindungsgemäß ist Anzeigebereich durch eine Projektionsfläche gebildet, welche durch mindestens ein Lichtelement beleuchtbar ist. Die Projektionsfläche kann durch einen transparenten oder teilweise transparenten Bereich gebildet sein, sie kann jedoch auch direkt durch einen Bereich der Komfortdüse gebildet sein, wie beispielsweise einen Teil des Rahmens an der Austrittsöffnung oder sichtbaren Lamellen in der Austrittsöffnung der Komfortdüse.

Erfindungsgemäß weist das Lichtelement einen veränderbaren Abstrahlwinkel auf, wobei der Abstrahlwinkel die Einstellung der Komfortdüse verdeutlicht.

Erfindungsgemäß ist der Anzeigebereich durch einen transparenten Blendenbereich und mindestens einen relativ zum transparenten Blendenbereich verschiebbaren, insbesondere bevorzugt linear verschiebbaren, Blendenbereich gebildet.

Im Falle von einem oder mehreren Lichtelementen kann über die Leuchtkraft oder Farbe derselben zusätzlich die Gebläsestärke angezeigt werden.

Im Folgenden wird die Erfindung anhand von mehreren Ausführungsbeispielen, teilweise unter Bezugnahme auf die Zeichnung, im Einzelnen erläutert. Es zeigen:
- Fig. 1: eine schematische Darstellung einer Anzeigeeinrichtung gemäß dem ersten Ausführungsbeispiel bei einer Be- triebsstellung der Komfortdüse "spot",
- Fig. 2: die Anzeigeeinrichtung von Fig. 1 bei einer Betriebsstel- lung der Komfortdüse "spot/diffus",
- Fig. 3: die Anzeigeeinrichtung von Fig- 1 bei einer Betriebsstel- lung der Komfortdüse "diffus",
- Fig.4: eine schematische Darstellung einer Anzeigeeinrichtung gemäß dem zweiten Ausführungsbeispiel bei einer Be- triebsstellung der Komfortdüse "spot" und gestrichelt dar- gestellt bei einer Betriebsstellung "diffus".
- Fig. 5: eine schematische Darstellung einer Anzeigeeinrichtung gemäß dem dritten Ausführungsbeispiel bei einer Be- triebsstellung der Komfortdüse "spot/diffus", und
- Fig. 6: eine schematische Darstellung einer Abwandlung des dritten Ausführungsbeispiels bei einer Betriebsstellung der Komfortdüse "spot/diffus".

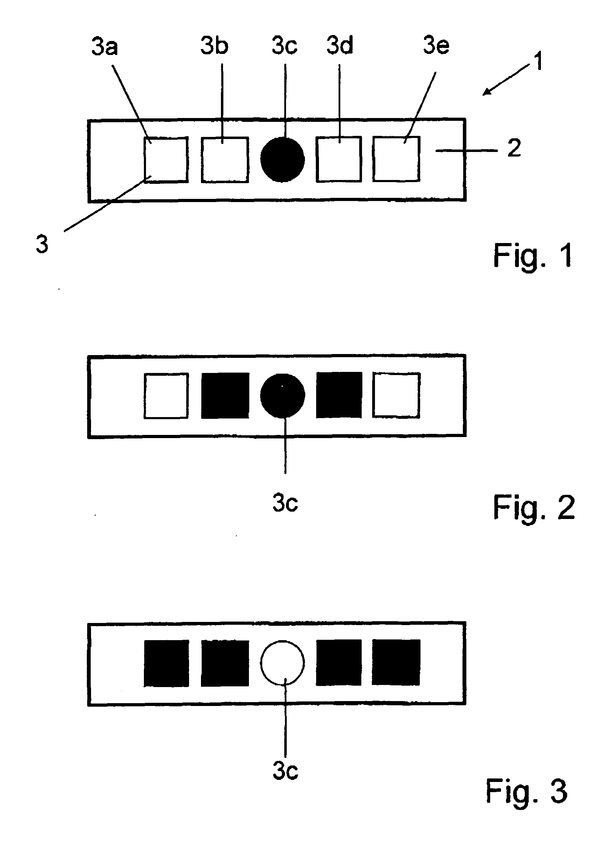

Im Frontbereich eines Kraftfahrzeug-Innenraums sind in die Instrumententafel integriert Düsen angeordnet, wobei vorliegend eine fahrerseitige Seitendüse, eine fahrerseitige Mitteldüse, eine beifahrerseitige Mitteldüse und eine beifahrerseitige Seitendüse vorgesehen sind, die jeweils als sogenannte Komfortdüsen, welche in Abhängigkeit der Einstellung einen gerichteten Luftstrahl (Spotstrahl) oder ein diffuses Ausströmen der Luft ermöglichen, ausgebildet sind. Jede dieser Komfortdüsen weist eine Anzeigeeinrichtung 1 gemäß dem ersten Ausführungsbeispiel auf, wie sie im Folgenden unter Bezugnahme auf Figuren 1 bis 3 beschrieben ist.

Die Anzeigeeinrichtung 1 für eine Komfortdüse (nicht dargestellt) mit ihrem visuell erkennbaren Anzeigebereich 2 weist bandartig vorliegend fünf Anzeigeelemente in Gestalt von einzelnen Lichtelementen 3 (3a-3e) auf, welche in einer Reihe angeordnet sind. Hierbei sind das mittlere Lichtelement 3c kreisförmig und die anderen Lichtelemente, 3a, 3b, 3d, 3e quadratisch ausgebildet, jedoch können auch alle Lichtelemente die gleiche Gestalt haben, beispielsweise kreisförmig ausgebildet sein.

Um auf möglichst einfache und leicht verständliche Weise die Einstellung der Komfortdüse in Bezug auf die Aufweitung des austretenden Luftstrahls anzuzeigen, zeigt das mittlere, kreisförmige Lichtelement 3c die Stellung 100% Spotstrahl sowie Spotstrahlanteile der austretenden Luft an, d.h. es ist immer dann beleuchtet, wenn mindestens ein Teil der Luft gerichtet austritt. Die Stellung 100% Spotstrahl ist in Fig. 1 dargestellt. Die anderen äußersten Lichtelemente 3a und 3e zeigen vorliegend die Stellung 100% diffuser Luftaustritt an (siehe Fig. 3), während die beiden anderen Lichtelemente 3b und 3d jeden diffusen Luftaustritt anzeigen, also neben 100% diffusem Luftaustritt auch Zwischenstellungen, wie beispielsweise eine Zwischenstellung mit 50% Spotstrahl und 50% diffusem Luftaustritt, in welcher zudem das mittlere Lichtelement 3c ebenfalls beleuchtet ist (siehe Fig. 2), anzeigen, jedoch die beiden äußersten Lichtelemente 3a und 3e nicht beleuchtet sind. Vorliegend werden die Lichtelemente 3 durch einzelne LEDs gebildet, welche über eine entsprechende Regelung mit der elektrisch betätigten Einstellung der Komfortdüse verbunden sind, so dass Anzeige und Einstellung übereinstimmen. Hierbei sind die äußersten Lichtelemente 3a und 3e miteinander regelungstechnisch gekoppelt, wie auch die benachbarten Lichtelemente 3b und 3d, so dass sich eine spiegelbildliche Veränderung der Anzeige im Falle einer Veränderung der Einstellung der Komfortdüse ergibt.

Alternativ ist auch eine mechanische Koppelung zwischen Komfortdüse und Anzeigeeinrichtung mit abdeckenden bzw. freigebenden Elementen möglich, welche in Abhängigkeit der Einstellung der Komfortdüse einzelne Lichtelemente oder ggf. auch einzelne lichtdurchlässige Bereiche hinter denen eine Lichtquelle angeordnet ist, abdecken oder freigeben, so dass der gleiche Effekt wie im Falle der zuvor beschriebenen LEDs erzeugt wird, sprich im Falle einer Betriebsstellung der Komfortdüse "spot" ist lediglich in der Mitte des Anzeigebereichs eine Markierung erkennbar, während in einer Betriebsstellung der Komfortdüse "diffus" über den gesamten Anzeigebereich Markierungen, abgesehen von der Mitte, erkennbar sind. In Zwischenstellungen sind entsprechend die mittlere Markierung sowie benachbarte Markierung erkennbar, nicht jedoch die äußeren Markierungen.

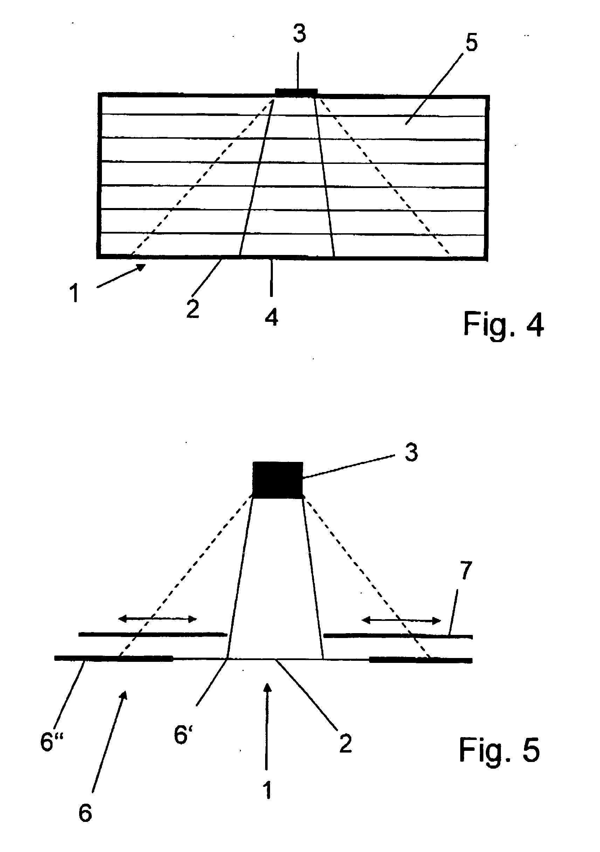

Gemäß dem zweiten Ausführungsbeispiel sind bei Komfortdüsen (in Fig. 4 ist nur der sichtbare Bereich einer Komfortdüse 5 mit Lamellen und Rahmen dargestellt) Anzeigeeinrichtungen 1 mit jeweils einem Anzeigebereich 2, welcher direkt durch einen in Gestalt einer Projektionsfläche 4 benutzten Rahmenbereich der Komfortdüse 5 gebildet ist, vorgesehen, wobei ein Lichtelement 3 der Projektionsfläche 4 gegenüberliegend angeordnet ist. Das Lichtelement 3 weist einen veränderbaren Abstrahlwinkel auf, wie in Fig. 4 durch durchgezogene und gestrichelte Linien angedeutet ist. Hierbei ist bei einer Betriebsstellung "spot" der Abstrahlwinkel des Lichtelements 3 minimal (durchgezogene Linien), während er in einer Betriebsstellung "diffus" maximal (gestrichelte Linien) ist. Zwischenstellungen werden durch Abstrahlwinkel angezeigt, welche zwischen den beiden angedeuteten Abstrahlwinkeln liegen.

Im Unterschied zum ersten Ausführungsbeispiel ist gemäß dem zweiten Ausführungsbeispiel eine stufenlose Anzeige möglich, jedoch ist keine Hervorhebung der beiden Betriebsstellungen "spot" und "diffus" möglich, die im Falle des ersten Ausführungsbeispiels durch eine ausschließliche Anzeige durch das mittlere Lichtelement bzw. durch das Fehlen einer Anzeige durch das mittlere Lichtelement möglich ist.

Die Projektionsfläche kann neben einem Teil des Rahmens der Komfortdüse auch durch eine beliebige andere Fläche, die einsehbar ist, sein. Ebenfalls kann als "Projektionsfläche" auch die gesamte Austrittsöffnung der Komfortdüse verwendet werden, so dass der Abstrahlwinkel des Lichtelements direkt in den Fahrzeuginnenraum gerichtet ist.

Fig. 5 zeigt das dritte Ausführungsbeispiel einer Anzeigeeinrichtung 1 einer Komfortdüse (nicht dargestellt), die einen Anzeigebereich 2 aufweist, welcher in eine Blende 6 mit einem in der Zeichnung dünn dargestellten, langgestreckt rechteckförmigen, transparenten Bereich 6' und einen den Anzeigebereich 2 umgebenden, in der Zeichnung dick dargestellten, undurchsichtigen Bereich 6" der Blende 6 integriert ist. Ein Lichtelement 3 mit einem konstanten Abstrahlwinkel strahlt im Prinzip auf den gesamten transparenten Bereich 6' der Blende 6, wie in Fig. 5 mit gestrichelten Linien angedeutet, jedoch ist - je nach Einstellung der Komfortdüse - ein Teil des transparenten Bereichs 6' der Blende durch zwei in Längsrichtung des transparenten Bereichs 6' verschiebbare Abdeckungen 7 verdeckt, so dass - je nach Einstellung der Komfortdüse - der gesamte transparente Bereich 6' der Blende 6 beleuchtet, nur ein Teilbereich beleuchtet oder nur ein der Betriebsstellung "spot" entsprechender minimaler Bereich in der Mitte des transparenten Bereichs 6' beleuchtet ist. Die Bewegung der verschiebbaren Abdeckungen 7 erfolgt spiegelbildlich zueinander, wobei sie vorliegend mechanisch gekoppelt mit einer Stellbewegung der Komfortdüse sind. Alternativ kann auch eine elektromotorische Bewegung der Abdeckungen erfolgen, wobei die Koppelung mit der Komfortdüse elektrisch ist.

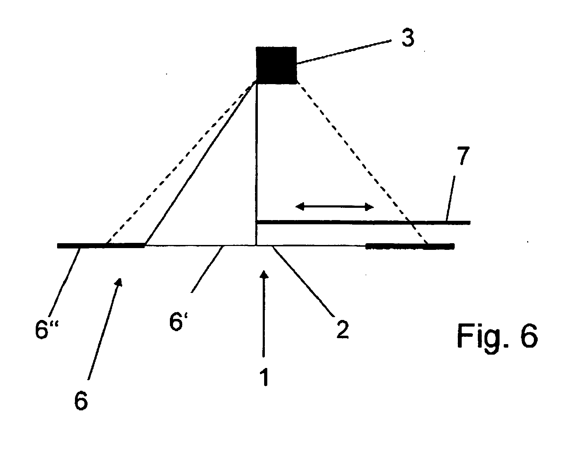

Fig. 6 zeigt eine Abwandlung des dritten Ausführungsbeispiels mit nur einer Abdeckung 7, d.h. ein Endbereich des rechteckförmigen, transparenten Bereichs 6' der Blende 6 bildet die Anzeige für eine Betriebsstellung "spot" der Komfortdüse und der mittlere und gegenüberliegende Bereich bilden die Anzeige für die Betriebsstellungen "spot/diffus" und "diffus".

Obwohl beim ersten und dritten Ausführungsbeispiel nicht explizit erwähnt, ist jeweils der Anzeigebereich in direkter Nähe der entsprechenden Komfortdüse angeordnet. Eine ggf. zusätzliche Anzeige ist jedoch auch in der Instrumententafel an zentraler Stelle denkbar.

## Patentansprüche

1. Anzeigeeinrichtung für eine Komfortdüse (5) mit einstellbarer Luftstrahlaufweitung, aufweisend eine Koppelung der aktuellen Einstellung der Luftstrahlaufweitung und einen Anzeigebereich (2) mit einer hierin angeordneten visuellen Anzeige mindestens einer Einstellung der Komfortdüse (5) durch mindestens ein Anzeigeelement, **dadurch gekennzeichnet, dass** die im Anzeigebereich (2) visuell erkennbare Anzeige die Aufweitung des aus der Komfortdüse (5) austretenden Luftstrahls wiedergibt und der Anzeigebereich (2) durch eine Projektionsfläche (4) gebildet ist, welche durch mindestens ein Lichtelement (3) beleuchtbar ist und das Lichtelement (3) einen veränderbaren Abstrahlwinkel aufweist und der Anzeigebereich (2) durch einen transparenten Blendenbereich (6') und mindestens einer relativ zum transparenten Blendenbereich (6') verschiebbaren Abdeckung (7) gebildet ist.

2. Anzeigeeinrichtung nach Anspruch 1, **dadurch gekennzeichnet, dass** die im Anzeigebereich (2) visuell erkennbare Anzeige eine variable, die aktuelle Einstellung der Komfortdüse (5) anzeigende Länge aufweist, und die Länge ausgehend von einem mittleren Bereich in beiden Richtungen veränderbar ist.

3. Anzeigeeinrichtung nach Anspruch 1 oder 2, **dadurch gekennzeichnet, dass** in Abhängigkeit der Einstellung der Komfortdüse die visuell erkennbare Anzeige, welche die aktuelle Einstellung der Komfortdüse (5) anzeigt, mindestens drei unterschiedliche Längen aufweisen kann.

4. Anzeigeeinrichtung nach einem der vorhergehenden Ansprüche, **dadurch gekennzeichnet, dass** der mittlere Bereich des Anzeigebereichs (2) einer Betriebsstellung "spot" der Komfortdüse (5) zugeordnet ist.

5. Anzeigeeinrichtung nach einem der vorhergehenden Ansprüche, **dadurch gekennzeichnet, dass** die beiden äußeren Enden des Anzeigebereichs (2) einer Betriebsstellung "diffus" der Komfortdüse (5) zugeordnet sind.

6. Anzeigeeinrichtung nach einem der vorhergehenden Ansprüche, **dadurch gekennzeichnet, dass** im Anzeigebereich (2) eine Mehrzahl von einzelnen Anzeigeelementen angeordnet ist, welche in Abhängigkeit der Betriebsstellung der Komfortdüse visuell hervorhebbar sind, wobei das mittlere Anzeigeelement einem zumindest teilweise gerichteten Luftaustritt, die benachbarten Anzeigeelemente einem zumindest teilweise diffusen Luftaustritt und die äußersten Anzeigeelemente einem 100% diffusen Luftaustritt zugeordnet sind.

7. Anzeigeeinrichtung nach einem der vorhergehenden Ansprüche, **dadurch gekennzeichnet, dass** das oder die Anzeigeelemente durch mindestens ein Lichtelement (3a-3e) gebildet sind.

## Claims

1. A display device for a comfort nozzle (5) having an adjustable air jet expansion, comprising a coupling of the current setting of the air jet expansion and a display area (2) having a visual display disposed therein of at least one setting of the comfort nozzle (5) by at least one display element, **characterized in that** the display, which is visibly recognizable in the display area (2), depicts the expansion of the air jet emerging from the comfort nozzle (5), and the display area (2) is formed by a projection surface (4) that can be illuminated by at least one light element (3), and the light element (3) has a changeable angle of radiation, and the display area (2) is formed by a transparent aperture region (6') and at least one cover (7) that is displaceable relative to the transparent aperture region (6').

2. The display device according to claim 1, **characterized in that** the display, which is visually recognizable in the display area (2), has a variable length that indicates the current setting of the comfort nozzle (5), and the length is changeable in both directions starting from a central region.

3. The display device according to claim 1 or 2, **characterized in that** the visually recognizable display, which displays the current setting of the comfort nozzle (5), can have at least three different lengths depending on the setting of the comfort nozzle.

4. The display device according to one of the preceding claims, **characterized in that** the central region of the display area (2) is assigned to an operating position "spot" of the comfort nozzle (5).

5. The display device according to one of the preceding claims, **characterized in that** the two outer ends of the display area (2) are assigned to an operating position "diffuse" of the comfort nozzle (5).

6. The display device according to one of the preceding claims, **characterized in that** a plurality of individual display elements are disposed in the display area (2) and can be emphasized visually depending on the operating position of the comfort nozzle, wherein the central display element is assigned to an air outset that is at least partially directed, the adjacent display elements are assigned to an at least partially diffuse air outlet, and the outer display elements are assigned to a 100% diffuse air outlet.

7. The display device according to one of the preceding claims, **characterized in that** the display element(s) are formed by at least one light element (3a-3e).

## Revendications

1. Dispositif d'affichage pour une buse d'aération de confort (5) comprenant un élargissement réglable du jet d'air, présentant un couplage du réglage - en cours - de l'élargissement du jet d'air et une zone d'affichage (2) comprenant un affichage visuel, disposé à l'intérieur de ladite zone, d'au moins un réglage de la buse d'aération de confort (5), par au moins un élément d'affichage, **caractérisé en ce que** l'affichage identifiable visuellement dans la zone d'affichage (2) reproduit l'élargissement du jet d'air sortant de la buse d'aération de confort (5), et la zone d'affichage (2) est formée par une surface de projection (4) qui peut être éclairée par au moins un élément lumineux (3), l'élément lumineux (3) présentant un angle de rayonnement modifiable, et la zone d'affichage (2) est formée par une zone de diaphragme transparente (6') et par au moins un cache (7) mobile par rapport à la zone de diaphragme transparente (6').

2. Dispositif d'affichage selon la revendication 1, **caractérisé en ce que** l'affichage identifiable visuellement dans la zone d'affichage (2) présente une longueur variable indiquant le réglage - en cours - de la buse d'aération de confort (5), et la longueur, en partant d'une zone centrale, est modifiable dans les deux directions.

3. Dispositif d'affichage selon la revendication 1 ou 2, **caractérisé en ce que** l'affichage identifiable visuellement, qui indique le réglage - en cours - de la buse d'aération de confort (5), peut présenter au moins trois longueurs différentes, ledit affichage étant réalisé en fonction du réglage de la buse d' aération de confort.

4. Dispositif d'affichage selon l'une quelconque des revendications précédentes, **caractérisé en ce que** la zone centrale de la zone d'affichage (2) est associée à une position de fonctionnement "jet dirigé" de la buse d'aération de confort (5).

5. Dispositif d'affichage selon l'une quelconque des revendications précédentes, **caractérisé en ce que** les deux extrémités extérieures de la zone d'affichage (2) sont associées à une position de fonctionnement "jet diffus" de la buse d'aération de confort (5).

6. Dispositif d'affichage selon l'une quelconque des revendications précédentes, **caractérisé en ce qu'**une pluralité d'éléments d'affichage différents est disposée dans la zone d'affichage (2), lesquels éléments d'affichage sont mis en valeur visuellement en fonction de la position de fonctionnement de la buse d'aération de confort, où l'élément d'affichage central est associé à une sortie d'air formant au moins partiellement un jet dirigé, les éléments d'affichage voisins étant associés à une sortie d'air formant au moins partiellement un jet diffus et les éléments d'affichage placées le plus à l'extérieur sont associés à une sortie d'air formant un jet diffus à 100 %.

7. Dispositif d'affichage selon l'une quelconque des revendications précédentes, **caractérisé en ce que** l'élément ou les éléments d'affichage est ou sont formé(s) par au moins un élément lumineux (3a - 3e).
